Europäisches Patentamt

European Patent Office

Office européen des brevets

(11) Publication number: 0 390 445
A2

# EUROPEAN PATENT APPLICATION

(21) Application number: 90303153.2

(22) Date of filing: 23.03.90

(51) Int. Cl.5: G11B 7/12

(30) Priority: 27.03.89 JP 75364/89

(43) Date of publication of application:
03.10.90 Bulletin 90/40

(84) Designated Contracting States:
DE FR GB

(71) Applicant: Matsushita Electric Industrial Co.,
Ltd.
1006, Oaza Kadoma
Kadoma-shi, Osaka-fu(JP)

(72) Inventor: Kadowaki, Shin-ichi
2-1, Ogaitocho 1-chome
Hirakata-shi(JP)
Inventor: Hori, Yoshikazu
7-3, Tanimachi 3-chome
Chuo-ku, Osaka-shi(JP)
Inventor: Kato, Makoto
10-43 Matsuzonocho
Nishinomiya-shi(JP)

(74) Representative: Votier, Sidney David et al
CARPMAELS & RANSFORD 43, Bloomsbury
Square
London WC1A 2RA(GB)

(54) Optical pickup head.

(57) An optical pickup head comprises a hybrid device having a laser source (1) and a photodetector unit (5) which are housed in a single package (2), a focussing lens (8) for receiving a laser beam emitted from the laser source and focussing the laser beam on an optical disk (4) serving as an optical memory medium, and a holographic optical element (6) for receiving a return optical beam reflected and diffracted at the optical disk and regenerating diffraction beams (81-84) directed to the photodetector unit. In the package, the photodetector unit is disposed closer to the bottom of the package than a light emitting point (10) of the source to make the upper surface of the photodetector unit substantially flush with the top of connection terminals (101) of the package, thereby improving working efficiency of bonding work for wiring between the photodetector unit and the connection terminals and compactness and reliability of the optical pickup head. Such a disposition of the photodetector unit is allowed by using the holographic optical element with a substantial concave lens function for the hologram region at which diffraction beams (81, 82) used for focussing error signal detection are generated.

FIG.4

# OPTICAL PICKUP HEAD

## BACKGROUND OF THE INVENTION

The present invention relates to an optical pickup head which can record, reproduce or erase optical information to be stored in an optical medium or a magneto-optical medium such as an optical disk or an optical card.

Optical memory technique using, as a high-density and large-capacity memory medium, an optical disk having a pit-shape pattern has been gaining widespread applications and has been practiced in the field of digital audio disk, video disk and document file disk as well as data file. A mechanism using an optical beam focussed to the order of micron for recording reproduction of information on or from an optical disk totally depends on its optics to successfully accomplish highly reliable recording reproduction of the information. The main component of the optics is an optical pickup head (OPU) apparatus and the fundamental function of the OPU apparatus is principally classified into three kinds of (I) focussing capability for formation of a diffraction-limited micro-spot, (II) focussing control of the optics and detection of pit signals and (III) tracking control of the optics. To fulfil these functions, various optics and opto-electric conversion/detection systems are used in combination in accordance with intended purposes and applications. Especially, in recent years, technique for simplifying and miniaturizing the optics has been announced wherein predetermined wavefronts for focussing and tracking control are recorded on a sheet of holographic optical element and each of the wavefronts reconstructed by a read beam emitted from an OPU apparatus is led to a photodetector. One may refer to (1) US Patent No. 4,358,200, 11/1982 "Optical Focussing-error Detection Method", (2) US Patent No. 4,665,310, 5/1987 "Apparatus for Optically Scanning an Information Plane wherein a Diffraction Grating splits the Beam into Two beams" and (3) US Patent 4,731,772, 5/1988 "Optical Head Using Hologram lens for both Beam Splitting and Focus Error Detection Functions".

According to any technique described above, a light source and a photodetector are housed in the same package to reduce the size of the OPU apparatus. As an example, the construction of an OPU apparatus depicted in Fig. 4 in USP 4,731,772 is herein shown in Fig. 1. Denoted by 68 is a hybrid device accomodating a semiconductor laser source and a photodetector. A coherent beam 70 emitted from the source is converted into a parallel beam by means of a collimating lens 72 and the parallel beam impinges upon a holographic optical element 74 so that a zero-order diffraction beam transmitting through the holographic optical element 74 is focussed on an optical disk 78 by means of a lens 76. A beam reflected and diffracted at the optical disk 78 returns to transmit through the lens 76 and impinge upon the holographic optical element 74 which in turn generates a first-order diffraction beam in addition to the transmitting zero-order diffraction beam. The first-order diffraction beam thus generated at the holographic optical element 74 transmits through the lens 72 so as to be focussed on the photodetector in the hybrid device 68. The photodetector then delivers a photoelectric current so that a focus error (FE) signal, a tracking error (TE) signal and a radio frequency information (RF) signal may be detected. Denoted by 80 is a focus and tracking actuator operable to control the position of the lens 76 such that the beam 70 can be focussed on the optical disk 78 and caused to follow pits or grooves formed in the optical disk in order to read information recorded on the optical disk.

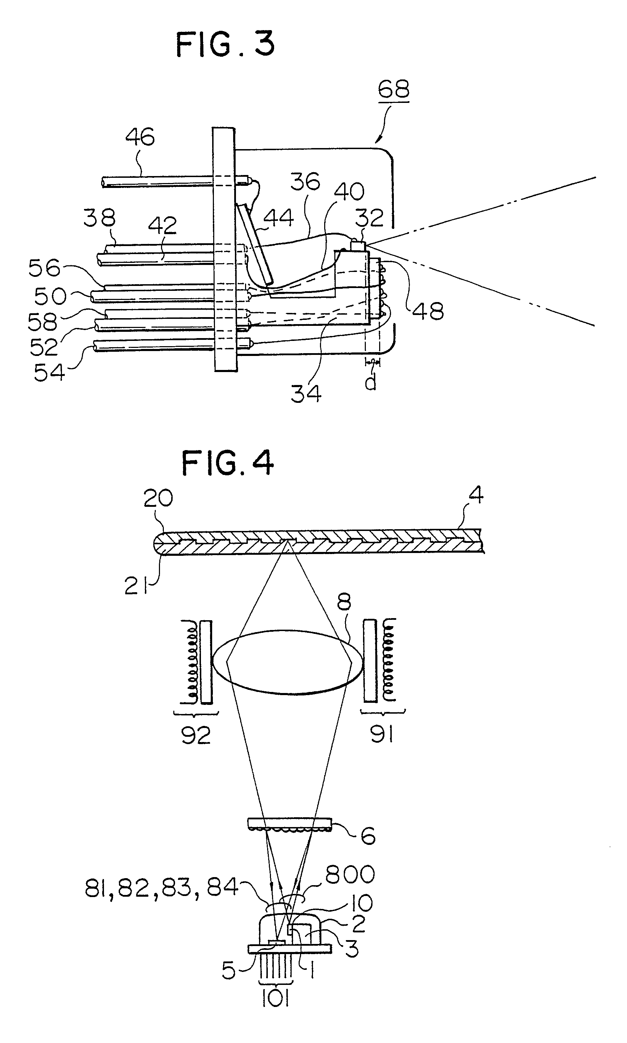

A top view (Fig. 3 in USP 4,757,197) depicting the hybrid device 68 accommodating the source and photodetector in the single package is shown herein in Fig. 2. Denoted by 38, 42, 46, 50, 52, 54, 56 and 58 are connection terminals which permits connection of the source 32 and photodetectors 44 and 48 housed in the package to external circuits, by 36 and 40 are bonding wires for connecting the source 32 and photodetector 44 to the connection terminals, and by 34 is a heat sink block for heat generated in the source 32. The photo-detector 44 is adapted to monitor the output of the source 34 and the photodetector 48 is adapted to receive the first-order diffraction beam generated from the holographic optical element 74. An OPU apparatus shown in USP 4,731,772 achieves size reduction of the OPU apparatus by using the hybrid device 68 shown in USP 4,757,197. The reference USP 4,757,197 does not disclose a side view of the hybrid device 68 but it may be gathered from the prior art (Fig. 2 in USP 4,757,197) and the top view (Fig. 3 in USP 4,757,197) that the side view of the device 68 is as shown herein in Fig. 3. The source 32 and photodetector 48 are respectively mounted on the top and side of the same block 34 to realize integration and a compact construction. However, the topographical level on which the connection terminals 38, 42, 46, 50, 52, 54, 56 and 58 lie differs from the topographical level on which the photodetector 48 lies and therefore the length of the bonding wires used to connect the photodetector 48 to the connection terminals 38, 42, 46, 50, 52, 54, 46 and 58 in the production of the hybrid device 68 is required to be as long as the level difference. In addition, in order to insure reliability against vibration and shock, the spacing between adjacent bonding wires must be wide enough to prevent short circuit, requiring that the spacing between adjacent connection terminals be set to be large. However, if the spacing between adjacent connection terminals is set to be large for avoidance of short circuit between bonding wires, the hybrid device 68 is increased in size and consequently the size of the OPU apparatus is also increased. Further, since the level difference between the photodetector 48 and connection terminals 38, 42, 46, 50, 52, 54, 56 and 58 requires three-dimensional movement in bonding work, working efficiency is degraded and applicability to mass production is impaired. Thus, the hybrid device shown in Fig. 3 has difficulties in size reduction of the OPU apparatus and applicability to mass production.

## SUMMARY OF THE INVENTION

An object of the invention is to provide a compact optical pickup head having good applicability to mass production.

To accomplish the above object, an optical pickup head according to the invention comprises a hybrid device having a laser source and a photodetector unit which are housed in a single package, a focussing lens for receiving a laser beam emitted from the laser source and focussing the laser beam on an optical disk serving as an optical memory medium, and a holographic optical element for receiving a return optical beam reflected and diffracted at the optical disk and generating diffraction beams directed to the photodetector unit. In accordance with the optical pickup head of the invention, in the package, the photodetector unit is disposed closer to the bottom of the package than a light emitting point of the source to make the upper surface of the photodetector unit substantially flush with the top of connection terminals of the package, thereby improving working efficiency of bonding work for wiring between the photodetector unit and the connection terminals and compactness and relaibility of the optical pickup head. Such a convenient disposition of the photodetector unit is allowed by using the holographic optical element with a substantial concave lens function for the hologram region at which diffraction beams used for focussing error signal detection are generated.

## BRIEF DESCRIPTION OF THE DRAWINGS

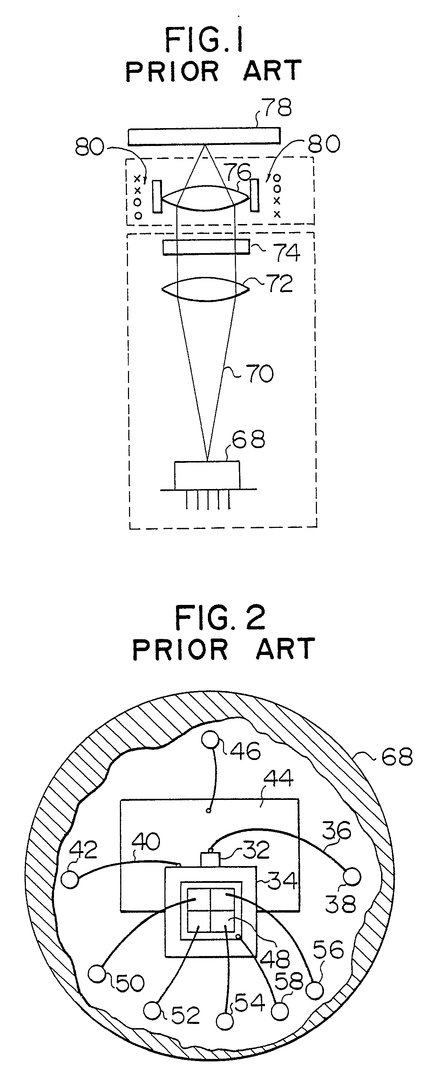

Fig. 1 is a schematic diagram illustrating an example of a prior art optical pickup head;

Fig. 2 is a top view of a hybrid device constituting the optical pickup head shown in Fig. 1;

Fig. 3 is a side view of the hybrid device constituting the pickup head shown in Fig. 1;

Fig. 4 is a schematic diagram illustrating an optical pickup head according to an embodiment of the invention;

Fig. 5A is a side view of a hybrid device constituting the pickup head shown in Fig. 4;

Fig. 5B is a top view of the hybrid device constituting the pickup head of Fig. 4;

Fig. 6A is a diagram schematically illustrating a holographic optical element constituting the pickup head of Fig. 4;

Fig. 6B is a diagram illustrating an example of a pattern of the Fig. 6A holographic optical element prepared through CGH (computer generated hologram);

Figs. 7A, 7B and 7C are diagrams useful to explain the general principle of a signal detection method;

Fig. 8A is a diagram illustrating another embodiment of the holographic optical element;

Fig. 8B is a schematic diagram for explaining the relation between diffraction beams and a photo-detector unit in the optical pickup head using the holographic optical element shown in Fig. 88;

Fig. 9 is a top view for explaining another embodiment of the hybrid device according to the invention; and

Fig. 10 is a schematic diagram for explaining an optical pickup head according to another embodiment of the invention.

## DETAILED DESCRIPTION OF THE PREFERRED EMBODIMENTS

Fig. 4 schematically illustrates the construction of an OPU according to an embodiment of the invention. Referring to Fig. 4, reference numeral 1 designates a semiconductor laser (for example, having a wavelength $\lambda_2 \simeq 780$ nm) for generating a coherent beam, 5 a photodetector unit, 3 a heat sink block for heat generated in the source 1, and 2 a package for accommodating the source 1 and photodetector unit 5. The source 1 and photodetector unit 5 housed in the package 2 constitute a hybrid device. Denoted by 101 are connection terminals for interconnecting the source 1 and photodetector unit 5 housed in the package 2 to external circuits, 8 a finite focal point system focussing lens, 91 an actuator for focussing control, 92 an actuator for tracking control, and 4 an optical memory medium (optical disk) on which a beam emitted from the source 1 is focussed. Denoted by 6 is a holographic optical element capable of reconstructing double wavefronts having different focal points. Part of the holographic optical element 6 is formed with different diffraction gratings and the holographic optical element 6 is interposed between the source 1 and lens 8 to permit a zero-order diffraction beam 800 on the going path to be focussed on the disk 4. The disk 4 is comprised of a substrate 20 formed with grooves or pits and a protective film 21. A beam on the returning path, reflected and diffracted at the disk 4, transmits through the lens 8 and impinges upon the holographic optical element 6 which in turn generates, in addition to the diffraction beam 800 diffracted in the optical axis direction, double diffraction beams 81, 82 having different focal points for production of an FE signal and double diffraction beams 83, 84 for production of a TE signal, these beams 81, 82 and 83, 84 being generated in directions deviating from the optical axis. A design method for the holographic optical element will be described later. The diffraction beams 81 to 84 are received at the light receiving surface of the photodetector unit 5 disposed closer to the bottom of the package 2 than a light emitting point 10 of the source 1. By disposing the photodetector unit 5 at the bottom of the package 2, the photodetector unit 5 can be flush with the top of the connection terminals with the height of the connection terminals 101 decreased within the package 2, thereby ensuring that the bonding wires can be reduced in length and can be supported stably. In addition, bonding work can be carried out on a plane through linear or two-dimensional movement. Therefore, for example, when bonding work is carried out while monitoring the upper surface of the photodetector unit 5 and the top surface of the connection terminals 101 in the hybrid device by means of a TV camera, the focus of the TV camera is not at all required to be adjusted during bonding work and as a result, working time for production of the hybrid device can be reduced considerably.

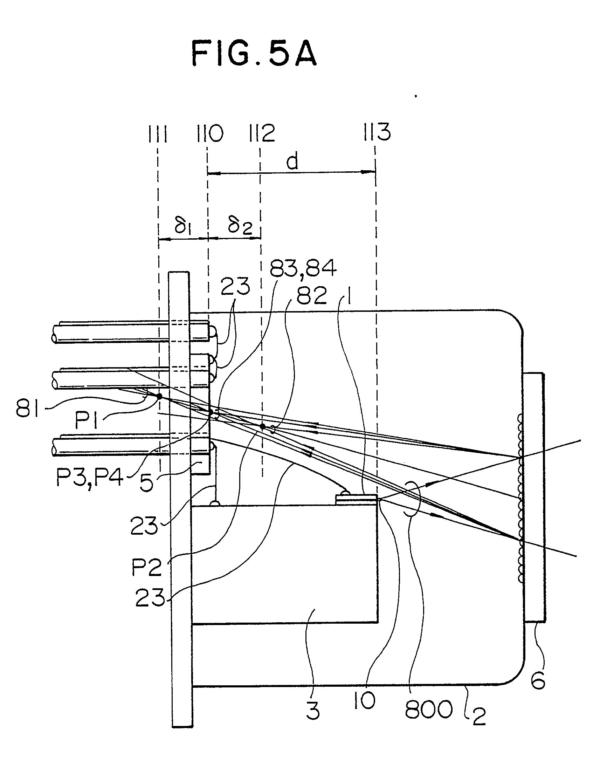

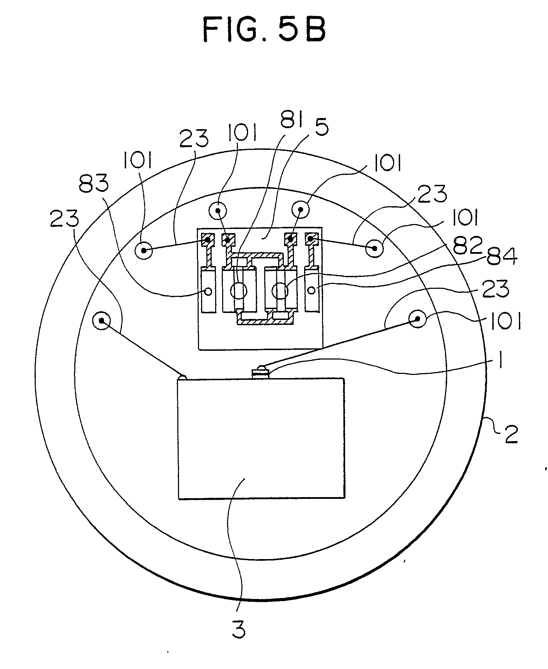

The present embodiment of the invention will be described in greater detail with reference to Figs. 5A and 5B specifically showing the hybrid device constructed of the source 1, photodetector unit 5 and package 2. Especially, Fig. 5A is a sectional view of the hybrid device and Fig. 5B is a view of the device as seen from above the package 2. Denoted by 23 are bonding wires connected to the connection terminals through which the source 1 and photodetector unit 5 can be connected to the external circuits. A plane 110 containing the light receiving surface of photodetector unit 5 can be allowed to be spaced by a distance d from a plane 113 containing the light emitting point 10 of the source 1 by making the holographic optical element 6 have the focussing function, i.e., substantial concave lens function corresponding to the distance d. The element 6 having the concave lens function increases the magnification of the optics to add an advantage that highly sensitive, valuable FE signals can be detected. In this embodiment, the element 6 generates the double diffraction beams 81, 82 for production of FE signal having different focal points and the double beams 83, 84 for production of TE signal. The element 6 may be designed as follows. More particularly, the diffraction beams 81 and 82 generated from the element 6 to detect the FE signal are designed to respectively have a focus P1 on a plane 111 which is $\delta_1$ distant from the upper surface 110 of the photodetector unit 5 and a focus P2 on a plane 112 which is $\delta_2$ distant from the photodetector unit surface 110 in order that the beam sizes of the diffraction beams 81 and 82 are equal to each other on the upper surface of the photodetector unit 5 when the beam 800 emitted from the source 1 is in-focus on the optical disk 4. On the other hand, the diffraction beams 83 and 84 generated from the holographic optical element 6 to detect the TE signal are desinged to have such focuses that the beam sizes of these diffraction beams are not so large as to go beyond the area of photodetectors constituting the photodetector unit 5. For example, the diffraction beam 83 and 84 may have focuses P3 and P4 on the upper surface of the photodetector unit 5. When the light emitting point 10 of the source 1 is used as a light source of a reference beam and the focal points P1 to P4 are used as light sources of object beams, the beams emitted from these light sources are superposed on each other at the position of the holographic optical element 6 to create interference fringes which are recorded on desired areas of the element 6 to prepare grating patterns thereon. For recording of the holographic optical element 6, a two-beam interferometric process and a computer generated hologram (CGH) are available, which are conventionally well known techniques and will not be detailed herein.

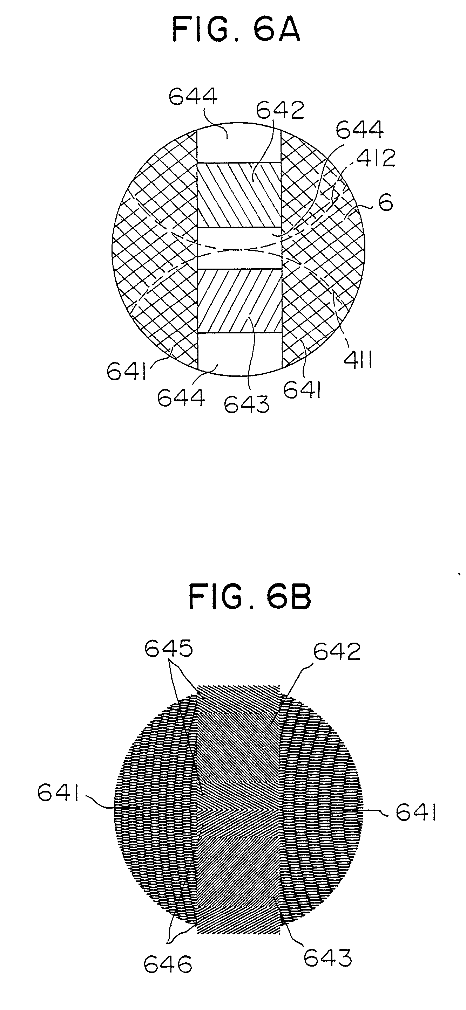

Figs. 6A and 6B illustrate examples of patterns recorded on the element 6. Especially, Fig. 6A schematically illustrates functional areas of the element 6. As shown, the element 6 has areas 641 capable reconstructing the double beams having different focal points used for FE signal detection, areas 642 and 643 for TE signal detection respectively having grating patterns recorded in different directions, and non-holographic pattern areas 644. as shown in Fig. 6B, by irradiating far field patterns 411 and 412 of the beam reflected and diffracted at the optical disc 4 on the element 6, the TE signal can be detected conveniently. Beams reconstructed by the element 6 are, as shown in Fig. 6B, the diffraction beams 81 and 82 from the functional areas 641 and the diffraction beams 83 and 84 from the functional areas 642 and 643. Because of the non-holographic pattern areas 644 formed on the element 6, even when the lens 8 is moved and consequently the aperture of beam is limited, the TE signal hardly has offset and stable tracking control is permitted. The provision of the non-holographic pattern areas is also advantageous in that even with this holographic optical element located at any position relative to the reflection beam from the optical disc 4, the TE signal component will not mix with the FE signal, thereby ensuring stable FE signl detection. Fruther, the non-holographic pattern areas 644 may be formed with diffraction gratings filling the role of dummy in order to make uniform the beam intensity distribution or may be formed with holographic optical elements for FE or TE signal detection. Fig. 6B shows an example of patterns of the element 6 prepared through CGH. In this example, diffraction gratings filling the role of dummy are formed in the non-holographic pattern areas 644 of the element 6.

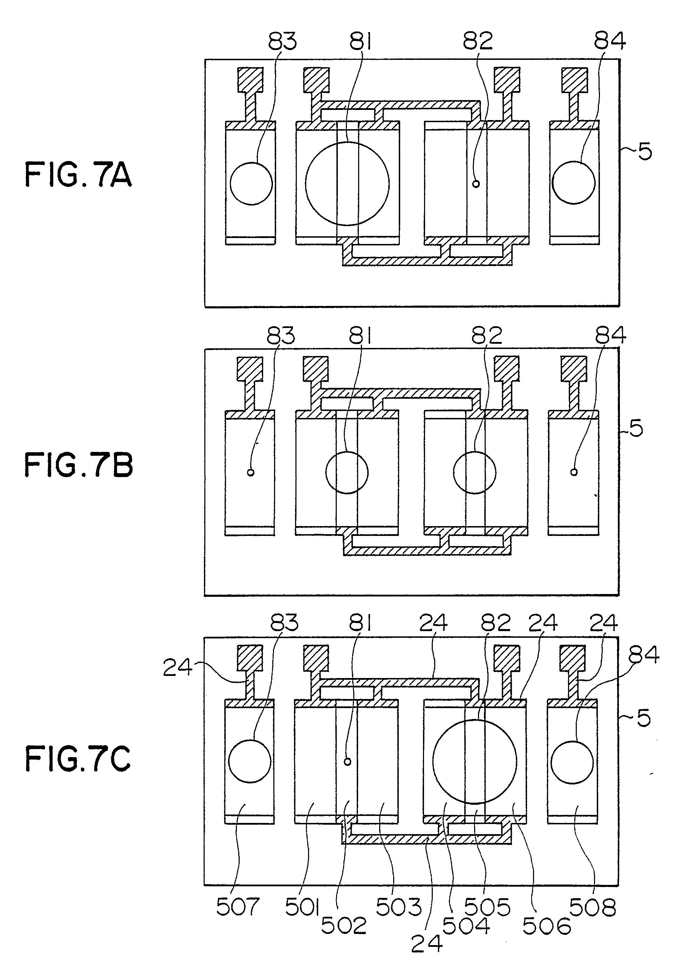

A method for signal detection employed in this embodiment will now be described in greater detail. Figs. 7A, 7B and 7C schematically and generally illustrate various relations set up among the diffraction beams 81 to 84 detected at respective photodetector areas 501 to 508 of the photodetector unit 5 in the hybrid device shown in Fig. 5B. Especially, Fig. 7B shows the case where the beam emitted from the source 1 is in-focus on the optical disk 4, and Figs. 7A and 7B show defocus states in opposite phase relationship. The FE signal can be obtained in the form of, for example, a differential output between the photodetectors 502 and 505. This type of FE signal detection scheme is called spot size detection and well known. For example, by adding outputs of 504 and 506 to the output of the photodetector 502 and adding outputs of 501 and 503 to the output of the photodetector 505, the differential output can be increased. On the other hand, the TE signal can be obtained in the form of a differential output between the photodetectors 507 and 508. The RF signal can be obtained as the sum of outputs of the photodetectors 501 to 508. If the photodetectors 501 to 506 are so constructed as to have the form of a strip-like linear array and the diffraction beams 81 and 82 are so designed as to make a relatively small angle to the light emitting point 10 of the source 1, then the diffraction beams can move substantially along near boundaries of the photodetectors, respectively and stable signal detection can be ensured even in event that the wavelength of the source 1 fluctuates. In this case, the angle may take a value which is approximately 30° or less without raising any practical problem. With the photodetectors 501 to 506 constructed in the form of the linear array, allowable positional error can be increased in mounting the source 1 and photodetector unit 5 in the package 2. Results of study on errors in position of the source and photodetector unit are described in "Integrated Holographic Optical Pickup Head with Wide Allowance Range", S. Kadowaki et al, Proc., Int., Symp. on Optical Memory, 1989, pp. 189-192.

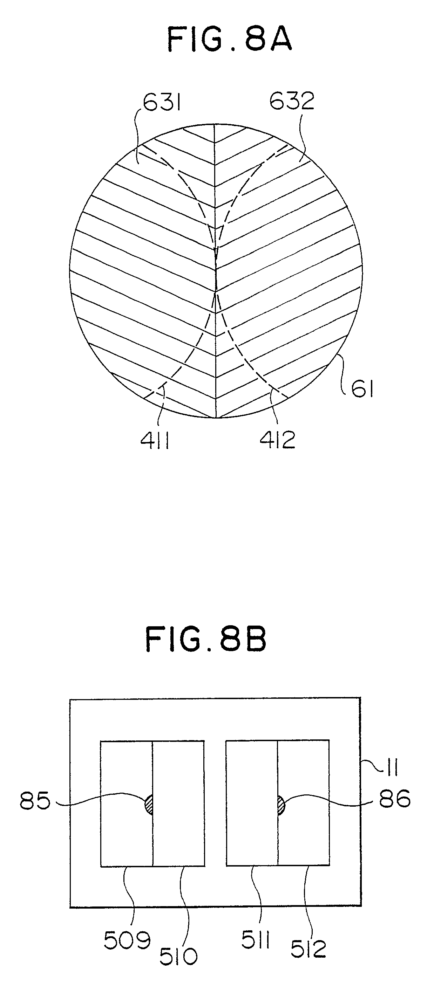

Figs. 8A and 8B conceptually show another embodiment of the invention. Especially, Fig. 8A schematically illustrates functional areas of a holographic optical element 61. Thus, the element 61 has grating areas 631 and 632 which can split the wavefronts for FE and TE signal detection. The FE and TE signal detection can be effected by irradiating on the element 61 far field patterns 411 and 412 of the beam reflected and diffracted at the disk, as shown in Fig. 8A. This FE signal detection is based on the well known double-knife edge method. In this embodiment, a photodetector unit 11 as shown in Fig. 8B is used in place of, for example, the photodetector unit 5 of the hybrid device shown in Fig. 5B and the element 61 is used in place of the holographic optical element 6 in the optical pickup head apparatus shown in Fig. 4, and diffraction beams 85 and 86 reconstructed from the functional areas 631 and 632 of the element 61 impinge upon the photodetector unit 11 as shown in Fig. 8B. The photodetector unit 11 is comprised of a plurality of photodetectors 509 to 512, and the FE signal can be obtained in the form of a differential signal between the sum of outputs of the photodetectors 509, 512 and the sum of outputs of the photodetectors 510, 511, the TE signal can be obtained in the form of a differential signal between the sum of outputs of the photodetectors 509, 510 and the sum of outputs of the photodetectors 511, 512, and the RF signal can be detected in the form of the sum of outputs of the photodetectors 509 to 512. Patterns of the element 61 may be designed such that the first-order diffraction beams 85 and 86 are focussed on the photodetector unit 11 when the beam 800 emitted from the source 1 is in-focus on the optical disc 4. The FE signal detection has been described as based on the spot size detection method or the double-knife edge method for illustration purpose only and obviously, other FE signal detection schemes for example, the astigmatic method and the single-knife edge method may also be applied to the present invention.

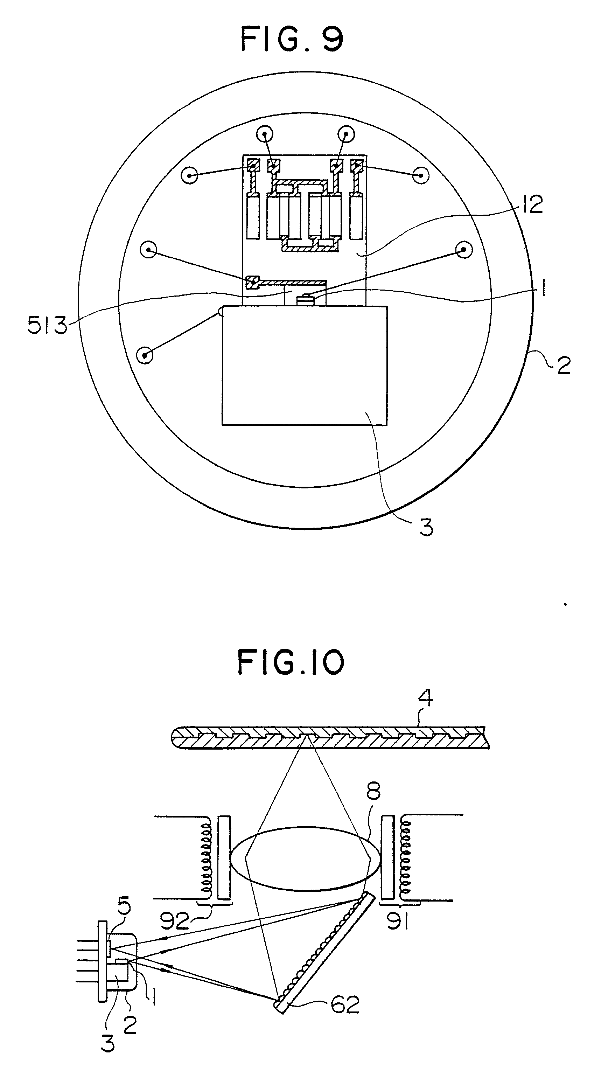

Fig. 9 conceptually shows another embodiment of the hybrid device of the invention. A hybrid device shown in Fig. 9 is realized by replacing the photodetector unit 5 constituting the hybrid device shown in Fig. 5B with a photodetector unit 12. The photodetector unit 12 is featured by the provision, in addition to the photodetectors for receiving the diffraction beams 81 to 84 from the holographic optical element 6, of a photodetector 513 formed on the same semiconductor substrate as that for the former photodetectors and operable to receive a beam emitted from a second emission surface of the source 1 oppoosing, through the source, a first emission surface of the source from which the beam directed to the disk 4 is emitted. The photodetector 513 is used for monitoring the output of the source. The output of the photodetector 513 receiving the beam emitted from the source 1 is applied to a control circuit operative to keep the output of the source constant. The method of keeping the output of the source constant is of well-known technique and will not be described herein. Since the FE signal, TE signal and RF signal as well as the laser output control signal can be detected by means of the photodetectors formed on the single substrate, the optics can be constructed easily to realize reduction in the number of parts and reduction in cost.

Fig. 10 conceptually shows an optical pickup head according to still another embodiment of the invention. In contrast to the transmission type holographic optical element 6 used in the embodiment of optical pickup head shown in Fig. 4, a reflection type element 62 is used in this embodiment so that the optical axis is bent. With this embodiment, the thickness of the optical pickup head can be reduced and an optical information processing apparatus using the optical pickup head of the present invention can also be reduced in thickness.

## Claims

1. An optical pickup head comprising:
a semiconductor laser source (1) for emitting a coherent or semi-monochromatic beam;
an imaging optics (8) for receiving the beam from said source and focussing it to a micro-spot on an optical memory medium (4);
a holographic optical element (6) for receiving a beam reflected from said optical medium and generating diffraction beams; and
a photodetector unit (5) for receiving the diffraction beams from said holographic element and delivering photoelectric currents,
wherein said source and said photodetector unit are housed in the same package (2), said package has input/output terminals (101) for connecting said source and photodetector unit housed in said package to external circuits, said photodetector unit is comprised of a plurality of photodetectors (501-508) formed on the same semiconductor substrate, said photodetector unit is disposed at a position which is remoter from said holographic optical element than a first plane (113) containing a light emitting point (10) of said source and being vertical to the optical axis thereof, and said holographic optical element has a function of substantial concave lens to permit detection of a focus error signal by means of the light receiving surface of said photo-detector unit.

2. An optical pickup head according to Claim 1, wherein said photodetector unit further includes a photodetector (513) for receiving a beam emitted from a second emission surface of said source opposing, through said source, a first emission surface of said source from which the beam directed to said optical medium is emitted.

3. An optical pickup head according to Claim 1, wherein said holographic optical element is mounted on said package.

4. An optical pickup head according to Claim 1, wherein said holographic optical element reconstructs double diffraction beams (81, 82) of different focal points (P1, P2), and said focal points of diffraction beams respectively lie after and before the upper surface of said photodetector unit so that said diffraction beams may have substantially the same size on said photodetector unit when the beam emitted from said source is in-focus on said optical memory medium.

5. An optical pickup head according to Claim 1, wherein part of said holographic optical element is formed with different diffraction gratings, holograms or non-holographic areas which are spatially independent or of multi-layer.

6. An optical pickup head according to Claim 1, wherein said photodetector unit is disposed to the bottom of said package.

EP 0 390 445 A2

# FIG. 1
# PRIOR ART

# FIG. 2
# PRIOR ART

# FIG. 3

# FIG. 4

# FIG.5A

# FIG. 5B

# FIG. 6A

644  642
644
412
6
641  411
644  643  641

# FIG. 6B

645  642
641  641
646  643

FIG.7A

FIG.7B

FIG.7C

# FIG. 8A

631    632

61

411    412

# FIG. 8B

85    11    86

509    511
510    512

# FIG. 9

12

1

513

2

3

# FIG.10

4

8

5

92

91

62

1

2

3